(19) Europäisches Patentamt
European Patent Office
Office européen des brevets

(11) EP 1 813 627 A1

(12) EUROPÄISCHE PATENTANMELDUNG

(43) Veröffentlichungstag:
**01.08.2007 Patentblatt 2007/31**

(51) Int Cl.:
***C08F 2/22*** *(2006.01)* ***C09J 5/00*** *(2006.01)*

(21) Anmeldenummer: **06100834.8**

(22) Anmeldetag: **25.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **BASF Aktiengesellschaft**
**67056 Ludwigshafen (DE)**

(72) Erfinder:
- **Birkert, Oliver**
**68163, Fussgönnheim (DE)**
- **Göthlich, Alexander**
**68163, Mannheim (DE)**
- **Schröder, Hartwig**
**69226, Nußloch (DE)**

(54) **Verfahren zur Herstellung von wässrigen Dispersionen aconitsäurehaltiger Copolymerisate**

(57) Verfahren zur Herstellung von wässrigen Dispersionen aconitsäurehaltiger Copolymerisate durch radikalisch initiierte wässrige Emulsionspolymerisation.

EP 1 813 627 A1

## Beschreibung

Gegenstand der vorliegenden Erfindung ist ein Verfahren zur Herstellung von wässrigen Dispersionen aconitsäurehaltiger Copolymerisate durch radikalisch initiierte wässrige Emulsionspolymerisation, welches dadurch gekennzeichnet ist, dass

a) zur Emulsionspolymerisation
a1) 0,1 bis 10 Gew.-% Aconitsäure [Monomer A1] und
a2) 90 bis 99,9 Gew.-% wenigstens einer weiteren radikalisch copolymerisierbaren ethylenisch ungesättigten Verbindung [Monomer A2] eingesetzt werden, dabei
b) im Polymerisationsgefäß
b1) eine Teil- oder die Gesamtmenge an Wasser,
b2) gegebenenfalls eine Teil- oder die Gesamtmenge an Dispergierhilfsmittel,
b3) gegebenenfalls eine Teil- oder die Gesamtmenge an Monomer A1,
b4) gegebenenfalls bis zu 20 Gew.-% der Gesamtmenge an Monomeren A2,
b5) gegebenenfalls eine Teil- oder die Gesamtmenge des Radikalinitiators sowie
b6) gegebenenfalls Teil- oder die Gesamtmengen weiterer optionaler Hilfsstoffe vorgelegt werden, daran anschließend
c) unter Polymerisationsbedingungen
c1) die gegebenenfalls verbliebene Restmenge an Wasser,
c2) die gegebenenfalls verbliebene Rest- oder die Gesamtmenge an Dispergierhilfsmittel,
c3) die gegebenenfalls verbliebene Rest- oder die Gesamtmenge an Monomer A1,
c4) die gegebenenfalls verbliebene Rest- oder die Gesamtmenge der Monomeren A2,
c5) die gegebenenfalls verbliebene Rest- oder die Gesamtmenge des Radikalinitiators sowie
c6) die gegebenenfalls verbliebenen Rest- oder die Gesamtmengen der weiteren optionalen Hilfsstoffe dem Polymerisationsgefäß zudosiert werden, wobei
d) dem Polymerisationsgefäß ≥ 90 Gew.-% der Gesamtmenge an Monomer A1 bis zu einem Zeitpunkt zudosiert werden, an dem ≤ 50 Gew.-% der Gesamtmonomerenmenge, gebildet aus der Summe der insgesamt eingesetzten Monomeren A1 und A2, dem Polymerisationsgefäß zudosiert wurden.

Gegenstand der vorliegenden Erfindung sind ebenfalls die nach dem Verfahren zugänglichen wässrigen Copolymerisatdispersionen und deren Verwendung in verschiedenen Einsatzgebieten.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch induzierte wässrige Emulsionspolymerisationsreaktionen erfolgen üblicherweise dergestalt, dass man die ethylenisch ungesättigten Monomere unter Mitverwendung von Dispergier-hilfsmitteln, im wässrigen Medium in Form von Monomerentröpfchen dispers verteilt und mittels eines radikalischen Polymerisationsinitiators polymerisiert. Dabei findet sich im Stand der Technik gelegentlich auch Aconitsäure in der Auflistung der optional einsetzbaren, radikalisch copolymerisierbaren ethylenisch ungesättigten Carbonsäuren.

So wird in der US-A 3,677,991 ein Verfahren zur Koagulation einer wässrigen anionischen Polymerdispersion im pH-Bereich von 8,8 bis 10,1 offenbart. Als zu coagulierendes Polymer wird ein Copolymerisat genannt, welches aus 70 bis 99,5 Gew.-% eines Acrylsäurealkylesters, 1,5 bis 8 Gew.-% einer ethylenisch ungesättigten Carbonsäure und bis zu 28 Gew.-% eines anderen Monomeren in einpolymerisierter Form aufgebaut ist. Als ethylenisch ungesättigte Carbonsäure wird auch Aconitsäure genannt, welche gemäß eines Beispiels im Monomermix mit Acrylsäure-n-butylester während des gesamten Zulaufzeitraums mit konstantem Mengenstrom zudosiert wird. Die nach diesem Verfahren erhaltenen wässrigen Copolymerisatdispersionen weisen eine hohe Viskosität sowie hohe Restmonomerengehalte auf.

Aufgabe der vorliegenden Erfindung war die Bereitstellung eines neuen Verfahrens zur Herstellung von wässrigen Dispersionen aconitsäurehaltiger Copolymerisate durch radikalisch initiierte wässrige Emulsionspolymerisation, welches sich durch niedrigere Viskositätswerte und niedrigere Restmonomerengehalte der erhaltenen wässrigen Copolymerisatdispersionen auszeichnet.

Überraschender Weise wurde die Aufgabe durch das eingangs definierte Verfahren gelöst.

Im vorliegenden erfindungsgemäßen Verfahren wird Wasser, häufig Trinkwasser, insbesondere bevorzugt jedoch entionisiertes Wasser verwendet, dessen Gesamtmenge so bemessen wird, dass sie 30 bis 90 Gew.-% und vorteilhaft 40 bis 60 Gew.-%, jeweils bezogen auf die durch das erfindungsgemäße Verfahren zugängliche wässrige

Copolymerisatdispersion, beträgt.

Erfindungsgemäß ist es möglich, eine Teil- oder die Gesamtmenge an Wasser im Polymerisationsgefäß im Verfahrensschritt b1) vorzulegen und die gegebenenfalls verbliebene Restmenge an Wasser im Verfahrensschritt c1) zuzudosieren.

Dabei kann die gegebenenfalls verbliebene Restmenge an Wasser dem Polymerisationsgefäß im Verfahrensschritt c1) diskontinuierlich in einer oder mehrerer Portionen oder kontinuierlich mit gleichbleibenden oder sich verändernden Mengenströmen zudosiert werden. Insbesondere vorteilhaft erfolgt die Dosierung an Wasser im Verfahrensschritt c1) kontinuierlich mit gleichbleibenden Mengenströmen, insbesondere als Bestandteil einer wässrigen Monomerenemulsion und/oder einer wässrigen Lösung des Radikalstarters.

Im Rahmen des erfindungsgemäßen Verfahrens werden Dispergierhilfsmittel mitverwendet, die sowohl die Monomerentröpfchen als auch Copolymerisatteilchen in der wässrigen Phase dispers verteilt halten und so die Stabilität der erzeugten wässrigen Copolymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

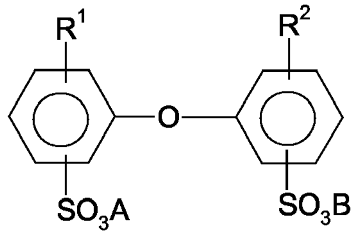

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium- oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4,269,749, und im Handel erhältlich.

Bevorzugt werden für das erfindungsgemäße Verfahren nichtionische und/oder anionische Dispergierhilfsmittel verwendet. Es können jedoch auch kationische Dispergierhilfsmittel eingesetzt werden.

In der Regel beträgt die Menge an eingesetztem Dispergierhilfsmittel 0,1 bis 5 Gew.-%, bevorzugt 0,5 bis 3

Gew.-%, jeweils bezogen auf die Gesamtmonomerenmenge.

Erfindungsgemäß ist es möglich, gegebenenfalls eine Teil- oder die Gesamtmenge an Dispergierhilfsmittel im Polymerisationsgefäß im Verfahrensschritt b2) vorzulegen. Es ist aber auch möglich, die Gesamtmenge oder die gegebenenfalls verbliebene Restmenge an Dispergierhilfsmittel im Verfahrensschritt c2) zuzudosieren.

Die Gesamtmenge oder die gegebenenfalls verbliebene Restmenge an Dispergierhilfsmittel kann dem Polymerisationsgefäß im Verfahrensschritt c2) diskontinuierlich in einer oder mehrerer Portionen oder kontinuierlich mit gleichbleibenden oder sich verändernden Mengenströmen zudosiert werden. Insbesondere vorteilhaft erfolgt die Dosierung der Dispergierhilfsmittel im Verfahrensschritt c2) kontinuierlich mit gleichbleibenden Mengenströmen, insbesondere als Bestandteil einer wässrigen Monomerenemulsion.

Erfindungsgemäß werden 0,1 bis 10 Gew.-%, bezogen auf die Gesamtmonomerenmenge an Monomer A1 eingesetzt. Vorteilhaft werden ≥ 0,2 Gew.-%, insbesondere vorteilhaft ≥ 0,3 Gew.-% oder ≥ 0,5 Gew.-% sowie ≤ 5 Gew.-%, insbesondere vorteilhaft ≤ 3 Gew.-% oder ≤ 2 Gew.-% an Monomer A1 eingesetzt. Mit Vorteil beträgt die Menge an Monomer A1 ≥ 0,3 und ≤ 3 Gew.-%, bezogen auf die Gesamtmonomerenmenge. Erfindungswesentlich ist, dass Monomer A1 dem Polymerisationsgefäß unter Polymerisationsbedingungen so zugegeben wird, dass ≥ 90 Gew.-% oder ≥ 95 Gew.-% der Gesamtmenge oder insbesondere vorteilhaft die Gesamtmenge an Monomer A1 bis zu einem Zeitpunkt zudosiert werden, an dem ≤ 50 Gew.-%, vorteilhaft ≤ 20 Gew.-% der Gesamtmonomerenmenge, gebildet aus der Summe der insgesamt eingesetzten Monomeren A1 und A2, dem Polymerisationsgefäß zudosiert wurden.

Erfindungsgemäß ist es möglich, gegebenenfalls eine Teil- oder die Gesamtmenge an Monomer A1 im Polymerisationsgefäß im Verfahrensschritt b3) vorzulegen. Es ist aber auch möglich, die Gesamtmenge oder die gegebenenfalls verbliebene Restmenge an Monomer A1 im Verfahrensschritt c3) zuzudosieren.

Dabei kann die Gesamtmenge oder die gegebenenfalls verbliebene Restmenge an Monomer A1 dem Polymerisationsgefäß im Verfahrensschritt c3) diskontinuierlich in einer oder mehreren Portionen oder kontinuierlich mit gleichbleibenden oder sich verändernden Mengenströmen zudosiert werden. Vorteilhaft erfolgt die Dosierung von Monomer A1 im Verfahrensschritt c3) kontinuierlich mit gleichbleibendem Mengenstrom.

Mit besonderem Vorteil wird jedoch die Gesamtmenge an Monomer A1 im Verfahrensschritt b3) im Polymerisationsgefäß vorgelegt.

Von Bedeutung für das vorliegende Verfahren ist ferner, dass unter Monomer A1 sowohl die cis-Aconitsäure wie auch die trans-Aconitsäure und Gemische aus cis-Aconitsäure und trans-Aconitsäure verstanden werden.

Zur Herstellung der erfindungsgemäßen wässrigen Copolymerisatdispersionen kommen als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -din-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% auf sich vereinen. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino) ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren A2 lediglich als modifizierende Monomere in Mengen von ≤ 10 Gew.-%, bevorzugt ≤ 5 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere,

zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt.

Vorteilhaft werden erfindungsgemäß als Monomere A2 solche Monomerenmischungen eingesetzt, welche zu

- 50 bis 99,9 Gew.-% Ester der Acryl- und/oder Methacrylsäure mit 1 bis 12 C-Atome aufweisenden Alkanolen und/oder Styrol, oder
- 50 bis 99,9 Gew.-% Styrol und Butadien, oder
- 50 bis 99,9 Gew.-% Vinylchlorid und/oder Vinylidenchlorid, oder
- 40 bis 99,9 Gew.-% Vinylacetat, Vinylpropionat und/oder Ethylen

enthalten.

Insbesondere vorteilhaft werden erfindungsgemäß als Monomere A2 solche Monomerenmischungen eingesetzt, welche zu

- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanolen und/oder Styrol, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% Styrol und Butadien, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 40 bis 99,9 Gew.-% Vinylacetat, Vinylpropionat und/oder Ethylen

enthalten.

Besonders günstig ist es, wenn die Mischungen der Monomeren A2 Acrylsäure und/oder Methacrylsäure enthalten.

Mit Vorteil werden die Monomeren A2 insbesondere in Form einer wässrigen Monomerenemulsion eingesetzt.

Erfindungsgemäß ist es möglich, gegebenenfalls bis zu 20 Gew.-% der Gesamtmenge an Monomeren A2 im Verfahrensschritt b4) im Polymerisationsgefäß vorzulegen. Gegebenenfalls werden ≤ 10 Gew.-% oder ≤ 5 Gew.-% der Gesamtmenge an Monomeren A2 im Polymerisationsgefäß vorgelegt. Es ist aber auch möglich, die Gesamtmenge oder die gegebenenfalls verbliebene Restmenge an Monomer A2 im Verfahrensschritt c4) zuzudosieren.

Dabei kann die Gesamtmenge oder die gegebenenfalls verbliebene Restmenge an Monomeren A2 dem Polymerisationsgefäß im Verfahrensschritt c4) diskontinuierlich in einer oder mehrerer Portionen oder kontinuierlich mit gleichbleibenden oder sich verändernden Mengenströmen zudosiert werden. Vorteilhaft erfolgt die Dosierung der Monomeren A2 im Verfahrensschritt c4) kontinuierlich mit gleichbleibenden Mengenströmen, insbesondere in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/ oder Natriummetabisulfit, Formaldehydsulfoxylate, beispielsweise Kalium- und/oder Natriumform-aldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(11)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Erfindungsgemäß ist es möglich, gegebenenfalls eine Teil- oder die Gesamtmenge an Radikalinitiator im Polymerisationsgefäß im Verfahrensschritt b5) vorzulegen. Es ist aber auch möglich, die Gesamtmenge oder die gegebenenfalls verbliebene Restmenge an Radikalinitiator im Verfahrensschritt c5) zuzudosieren.

Die Gesamtmenge oder die gegebenenfalls verbliebene Restmenge an Radikalinitiator kann dem Polymerisationsgefäß im Verfahrensschritt c5) diskontinuierlich in einer oder mehrerer Portionen oder kontinuierlich mit gleichbleibenden oder sich verändernden Mengenströmen zudosiert werden. Insbesondere vorteilhaft erfolgt die Dosierung der Radikalinitiator im Verfahrensschritt c5) kontinuierlich mit gleichbleibendem Mengenstrom, insbesondere in Form einer wässrigen Lösung des Radikalinitiators.

Erfindungsgemäß können auch weitere, dem Fachmann geläufige optionale Hilfsstoffe, wie beispielsweise sogenannte Verdicker, Entschäumer, Neutralisationsmittel, Konservierungsmittel, radikalkettenübertragende Verbindungen und/oder Komplexiermittel eingesetzt werden.

Um die Rheologie der erfindungsgemäß zugänglichen wässrigen Copolymerisatdispersionen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdicker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der erfindungsgemäß zugänglichen wässrigen Copolymerisatdispersionen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Falls erforderlich, können dem Fachmann als Neutralisationsmittel geläufige Säuren oder Basen zur pH-Werteinstellung der erfindungsgemäß zugänglichen wässrigen Copolymerisatdispersionen verwendet werden.

Um den Befall der erfindungsgemäß zugänglichen wässrigen Copolymerisatdispersionen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biocide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben den vorgenannten Komponenten können im erfindungsgemäßen Verfahren zur Herstellung der wässrigen Copolymerisatdispersionen optional auch radikalkettenübertragende Verbindungen eingesetzt werden, um das

Molekulargewicht der durch die Polymerisation zugänglichen Copolymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz.

Die Gesamtmenge der weiteren optionalen Hilfsstoffe, bezogen auf die Gesamtmonomerenmenge, ist in der Regel ≤ 10 Gew.-%, ≤ 5 Gew.-%, oft ≤ 3 Gew.-% und häufig ≤ 1 Gew.-%.

Erfindungsgemäß ist es möglich, gegebenenfalls Teil- oder Gesamtmengen an weiteren optionalen Hilfsstoffen im Polymerisationsgefäß im Verfahrensschritt b6) vorzulegen. Es ist aber auch möglich, Gesamtmengen oder die gegebenenfalls verbliebenen Restmengen an weiteren optionalen Hilfsstoffen im Verfahrensschritt c6) zuzudosieren.

Die Gesamtmengen oder die gegebenenfalls verbliebenen Restmengen an weiteren optionalen Hilfsstoffen können dem Polymerisationsgefäß im Verfahrensschritt c6) diskontinuierlich in einer oder mehrerer Portionen oder kontinuierlich mit gleichbleibenden oder sich verändernden Mengenströmen zudosiert werden. Insbesondere vorteilhaft erfolgt die Dosierung an weiteren optionalen Hilfsstoffen im Verfahrensschritt c6) kontinuierlich mit gleichbleibendem Mengenströmen.

Optional kann die erfindungsgemäße radikalisch initiierte wässrige Emulsionspolymerisation auch in Anwesenheit einer Polymersaat, beispielsweise in Anwesenheit von 0,01 bis 10 Gew.-%, häufig von 0,02 bis 5 Gew.-% und oft von 0,04 bis 1,5 Gew.-% einer Polymersaat, jeweils bezogen auf die Gesamtmonomerenmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2,520,959 und US-A 3,397,165).

Insbesondere werden Polymersaatpartikel eingesetzt, deren Teilchengrößenverteilung eng und deren gewichtsmittlerer Durchmesser $D_w$ ≤ 100 nm, häufig ≥ 5 nm bis ≤ 50 nm und oft ≥ 15 nm bis ≤ 35 nm ist. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Gesamtmonomerenmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren

in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Erfindungsgemäß ist es möglich, gegebenenfalls eine Teil- oder die Gesamtmenge an Fremdpolymersaat als weiteren optionalen Hilfsstoff im Polymerisationsgefäß im Verfahrensschritt b6) vorzulegen. Es ist aber auch möglich, die Gesamtmenge oder die gegebenenfalls verbliebene Restmengen an Fremdpolymersaat im Verfahrensschritt c6) zuzudosieren.

Die Gesamtmengen oder die gegebenenfalls verbliebenen Restmengen an Fremdpolymersaat kann dem Polymerisationsgefäß im Verfahrensschritt c6) diskontinuierlich in einer oder mehrerer Portionen oder kontinuierlich mit gleichbleibendem oder sich veränderndem Mengenstrom zudosiert werden.

Vorzugsweise wird die Gesamtmenge an Fremdpolymersaat im Verfahrensschritt b6) im Polymerisationsgefäß vorgelegt.

Unter Polymerisationsbedingungen sind diejenigen Temperaturen und Drücke zu verstehen, unter denen die radikalisch initiierte wässrige Emulsionspolymerisation mit ausreichender Polymerisationsgeschwindigkeit verläuft und ist insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist.

Abhängig vom gewählten Radikalinitiator kommt als Reaktionstemperatur für die erfindungsgemäße radikalische wässrige Emulsionspolymerisation der gesamte Bereich von 0 bis 170 °C in Betracht. Dabei werden in der Regel Temperaturen von 50 bis 150 °C, insbesondere 60 bis 130 °C und vorteilhaft 70 bis 120 °C angewendet. Die erfindungsgemäße radikalische wässrige Emulsionspolymerisation kann bei einem Druck kleiner, gleich oder größer 1 atm (absolut) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm (1,01 bar absolut) unter Inertgasatmosphäre, wie beispielsweise unter Stickstoff oder Argon durchgeführt.

In der Regel erfolgt das erfindungsgemäße Verfahren dergestalt, dass im Polymerisationsgefäß bei 20 bis 25 °C (Raumtemperatur) und Atmosphärendruck unter Inertgasatmospäre die Komponenten b1) bis b6) vorgelegt werden, daran anschließend das Komponentengemisch unter Rühren auf die geeignete Polymerisationstemperatur aufgeheizt wird und danach die Verfahrensschritte c1) bis c6) unter den Bedingungen gemäß d) durchgeführt werden.

Soll jedoch die erfindungsgemäße radikalische wässrige Emulsionspolymerisation bei einer Temperatur unterhalb der Raumtemperatur erfolgen, so werden vorteilhaft die Komponenten b1) bis b6) im Polymerisationsgefäß bei Raumtemperatur und Atmosphärendruck unter Inertgasatmospäre vorgelegt, daran anschließend das Komponentengemisch unter Rühren auf die geeignete Polymerisationstemperatur abgekühlt und danach die Verfahrensschritte c1) bis c6) unter den Bedingungen gemäß d) durchgeführt. Dabei ist es vorteilhaft, wenn die Gesamtmenge des Radikalinitiators dem Polymerisationsgefäß über den Verfahrensschritt c5) zugeführt wird. Handelt es sich bei dem Radikalinitiator um ein Redoxsystem, so ist es vorteilhaft, wenn wenigstens die Dosierung der Gesamtmenge des Reduktionsmittels im Verfahrensschritt c5) erfolgt.

Das wässrige Reaktionsmedium kann prinzipiell auch noch geringe Mengen an wasserlöslichen organischen Lösungsmitteln, wie beispielsweise Methanol, Ethanol, Iso-propanol, Butanole, Pentanole, aber auch Aceton etc. umfassen. Bevorzugt wird das erfindungsgemäße Verfahren jedoch in Abwesenheit solcher Lösungsmittel durchgeführt.

Das erfindungsgemäße Verfahren erfolgt insbesondere vorteilhaft dergestalt, dass die Dosierung der Komponenten c1) bis c6) kontinuierlich in gleichbleibenden Mengenströmen erfolgt.

Durch gezielte Variation von Art und Menge der Monomeren A1 [cis- und/oder trans-Aconitsäure] und A2 ist es dem Fachmann erfindungsgemäß möglich, wässrige Copolymerisatdispersionen herzustellen, deren Copolymerisate eine Glasübergangstemperatur bzw. einen Schmelzpunkt im Bereich von -60 bis 270 °C aufweisen. Abhängig vom gewünschten Einsatzzweck beträgt die Glasübergangstemperatur beispielsweise ≥ -50 bis ≤ 100 °C oder ≥ -40 bis ≤ 50 °C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die nach dem erfindungsgemäßen Verfahren zugänglichen wässrigen Copolymerisatdispersionen weisen oft Copolymerisate auf, deren Mindestfilmbildetemperatur MFT ≤ 80 °C häufig ≤ 50 °C oder ≤ 30 °C beträgt. Da die MFT unterhalb 0 °C nicht mehr messbar ist, kann die untere Grenze der MFT nur durch die $T_g$-Werte angegeben werden. Die Bestimmung der MFT erfolgt nach DIN 53787.

Die erhaltene wässrige Polymerisatdispersion weist üblicherweise einen Polymerisatfeststoffgehalt von ≥ 10 und ≤ 70 Gew.-%, häufig ≥ 20 und ≤ 65 Gew.-% und oft ≥ 40 und ≤ 60 Gew.-%, jeweils bezogen auf die wässrige Copolymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 70 und 700 nm bzw. 80 bis 400 nm.

Vorteilhaft an vorliegendem Verfahren ist, dass die Restgehalte an Monomeren A1 und A2 in den erfindungsgemäß erhaltenen wässrigen Copolymerisatdispersion im Vergleich zu den nach den Verfahren des Standes der Technik erhaltenen wässrigen Copolymerisatdispersionen - auch ohne Restmonomerenentfernung - deutlich geringer sind. Desweiteren zeichnen sich die erfindungsgemäß erhaltenen wässrigen Copolymerisatdispersionen durch niedrigere Viskositätswerte im Vergleich zu den wässrigen Copolymerisatdispersionen des Standes der Technik aus.

Selbstverständliche können jedoch auch bei den erfindungsgemäß erhaltenen wässrigen Copolymerisatdispersionen die verbleibenden Restgehalte an nicht umgesetzten Monomeren A1 und A2 sowie anderen leichtsiedenden Verbindungen durch dem Fachmann ebenfalls bekannte chemische und/oder physikalische Methoden [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und DE-A 198 47 115 herabgesetzt werden.

Darüber hinaus können die nach dem erfindungsgemäßen Verfahren zugänglichen wässrigen Copolymerisatdispersionen als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen eingesetzt werden.

Ferner sind aus den erfindungsgemäßen wässrigen Copolymerisatdispersionen in einfacher Weise (beispielsweise Gefrier- oder Sprühtrockung) die entsprechenden Copolymerisatpulver zugänglich, welche sich ebenfalls vorteilhaft als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen einsetzen lassen.

Folgende nicht einschränkende Beispiele sollen die Erfindung erläutern.

Beispiel 1

In einem 3 l 4-Halspolymerisationsreaktor, ausgerüstet mit einem Anker-Rührer und zwei Dosiereinrichtungen wurden bei Raumtemperatur und unter Stickstoffatmosphäre 300 g entionisiertes Wasser, 10 g einer wässrigen Polystyrolsaat (Feststoffgehalt 33 Gew.-%, zahlenmittlerer Teilchendurchmesser 32 nm), 3 g trans-Aconitsäure sowie 5 g von Zulauf 2 vorgelegt. Anschließend wurde der Reaktorinhalt unter Rühren auf 85 °C aufgeheizt. Nach Erreichen von 85 °C wurden zeitgleich beginnend die Gesamtmenge an Zulauf 1 innerhalb von 4 Stunden und die Restmenge von Zulauf 2 innerhalb von 5 Stunden kontinuierlich mit gleichbleibenden Mengenströmen zudosiert. Daran anschließend ließ man den Reaktorinhalt noch 1 Stunde bei 85 °C nachreagieren und kühlte dann den Reaktionsansatz auf Raumtemperatur ab.

Zulauf 1 bestehend aus:

| | |
|---|---|
| 80 g | Styrol |
| 400 g | n-Butylacrylat |
| 80 g | Acrylnitril |
| 20 g | Acrylsäure |

(fortgesetzt)

| | |
|---|---|
| 220 g | entionisiertes Wasser und |
| 20 g | einer 15 gew.-%igen wässrigen Natriumdodecylsulfat-Lösung |

Zulauf 2 bestehend aus:

| | |
|---|---|
| 45 g | einer 4 gew.-%igen wässrigen Natriumpersulfat-Lösung |

Die erhaltene wässrige Polymerisatdispersion wies einen Feststoffgehalt von 50,4 Gew.-%, bezogen auf das Gesamtgewicht der wässrigen Dispersion, auf. Die Viskosität betrug 160 mPas. Die Teilchengröße wurde zu 200 nm, der Restbutylacrylatgehalt zu 4840 ppm und der Reststyrolgehalt zu 840 ppm bestimmt.

Der Feststoffgehalt wurde generell bestimmt, indem eine definierte Menge der wässrigen Polymerisatdispersion (ca. 5 g) bei 140 °C in einem Trockenschrank bis zur Gewichtskonstanz getrocknet wurde. Es wurden zwei separate Messungen durchgeführt. Die in den Beispielen angegebenen Werte stellen den Mittelwert der beiden Messergebnisse dar.

Die Bestimmung der Viskositäten erfolgte generell mit einem Brookfield-Viskosimeter "Brookfield RVT", Spindel 4, 100 UPM; Temperatur: 25 °C; Konzentration des Polymers (Festgehalt) wie in Beispielen angegeben.

Die Restgehalte an n-Butylacrylat und Styrol wurden generell mittels Gaschromatographie bestimmt (Gerät: Autosystem GC mit HS40 von Perkin Elmer, Säule: DB-1 von J&W Scientific, 30 m).

Die mittleren Teilchendurchmesser der Polymerteilchen wurden generell durch dynamische Lichtstreuung an einer 0,005 bis 0,01 gewichtsprozentigen wässrigen Polymerdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Beispiel 2

Die Durchführung von Beispiel 2 erfolgte analog Beispiel 1 mit dem Unterschied, dass die trans-Aconitsäure nicht in der Vorlage vorgelegt, sondern, gelöst in 10 g entionisiertem Wasser, zeitgleich beginnend mit den Zuläufen 1 und 2, innerhalb von 80 Minuten zudosiert wurde. Entsprechend wurden in Zulauf 1 lediglich 210 g entionisiertes Wasser eingesetzt.

Die erhaltene wässrige Polymerisatdispersion wies einen Feststoffgehalt von 50,2 Gew.-%, bezogen auf das Gesamtgewicht der wässrigen Dispersion, auf. Die Viskosität betrug 160 mPas. Die Teilchengröße wurde zu 190 nm, der Restbutylacrylatgehalt zu 5010 ppm und der Reststyrolgehalt zu 920 ppm bestimmt.

Vergleichsbeispiel 1

Die Durchführung von Vergleichsbeispiel 1 erfolgte analog Beispiel 1 mit dem Unterschied, dass die trans-Aconitsäure nicht in der Vorlage vorgelegt, sondern gelöst in Zulauf 1 zudosiert wurde.

Die erhaltene wässrige Polymerisatdispersion wies einen Feststoffgehalt von 50,3 Gew.-%, bezogen auf das Gesamtgewicht der wässrigen Dispersion, auf. Die Viskosität betrug 220 mPas. Die Teilchengröße wurde zu 200 nm, der Restbutylacrylatgehalt zu 10520 ppm und der Reststyrolgehalt zu 1310 ppm bestimmt.

## Patentansprüche

1. Verfahren zur Herstellung von wässrigen Dispersionen aconitsäurehaltiger Copolymerisate durch radikalisch initiierte wässrige Emulsionspolymerisation, **dadurch gekennzeichnet, dass**

   a) zur Emulsionspolymerisation
   a1) 0,1 bis 10 Gew.-% Aconitsäure [Monomer A1] und
   a2) 90 bis 99,9 Gew.-% wenigstens einer weiteren radikalisch copolymerisierbaren ethylenisch ungesättigten Verbindung [Monomer A2] eingesetzt werden, dabei
   b) im Polymerisationsgefäß
   b1) eine Teil- oder die Gesamtmenge an Wasser,
   b2) gegebenenfalls eine Teil- oder die Gesamtmenge an Dispergierhilfsmittel,
   b3) gegebenenfalls eine Teil- oder die Gesamtmenge an Monomer A1,

b4) gegebenenfalls bis zu 20 Gew.-% der Gesamtmenge an Monomeren A2,
b5) gegebenenfalls eine Teil- oder die Gesamtmenge des Radikalinitiators sowie
b6) gegebenenfalls Teil- oder die Gesamtmengen weiterer optionaler Hilfsstoffe vorgelegt werden, daran anschließend
c) unter Polymerisationsbedingungen
c1) die gegebenenfalls verbliebene Restmenge an Wasser,
c2) die gegebenenfalls verbliebene Rest- oder die Gesamtmenge an Dispergierhilfsmittel,
c3) die gegebenenfalls verbliebene Rest- oder die Gesamtmenge an Monomer A1,
c4) die gegebenenfalls verbliebene Rest- oder die Gesamtmenge der Monomeren A2,
c5) die gegebenenfalls verbliebene Rest- oder die Gesamtmenge des Radikalinitiators sowie
c6) die gegebenenfalls verbliebenen Rest- oder die Gesamtmengen der weiteren optionalen Hilfsstoffe dem Polymerisationsgefäß zudosiert werden, wobei
d) dem Polymerisationsgefäß ≥ 90 Gew.-% der Gesamtmenge an Monomer A1 bis zu einem Zeitpunkt zudosiert werden, an dem ≤ 50 Gew.-% der Gesamtmonomerenmenge, gebildet aus der Summe der insgesamt eingesetzten Monomeren A1 und A2, dem Polymerisationsgefäß zudosiert wurden.

**2.** Verfahren nach Anspruch 1, **dadurch gekennzeichnet, dass** die Menge an Monomer A1 ≥ 0,3 und ≤ 3 Gew.-%, bezogen auf die Gesamtmonomerenmenge, beträgt.

**3.** Verfahren nach Anspruch 1 oder 2, **dadurch gekennzeichnet, dass** dem Polymerisationsgefäß die Gesamtmenge an Monomer A1 bis zu einem Zeitpunkt zudosiert wird, an dem ≤ 50 Gew.-% der Gesamtmonomerenmenge dem Polymerisationsgefäß zudosiert wurden.

**4.** Verfahren nach einem der Ansprüche 1 bis 3, **dadurch gekennzeichnet, dass** dem Polymerisationsgefäß die Gesamtmenge an Monomer A1 bis zu einem Zeitpunkt zudosiert wird, an dem ≤ 20 Gew.-% der Gesamtmonomerenmenge dem Polymerisationsgefäß zudosiert wurden.

**5.** Verfahren nach einem der Ansprüche 1 bis 4, **dadurch gekennzeichnet, dass** die Gesamtmenge an Monomer A1 dem Polymerisationsgefäß in Verfahrensschritt b3) zugegeben wird.

**6.** Verfahren nach einem der Ansprüche 1 bis 5, **dadurch gekennzeichnet, dass** als Monomere A2 eine Monomerenmischung eingesetzt wird, welche zu

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinylester langkettiger Fettsäuren und/oder Ethylen |

enthält.

**7.** Verfahren nach einem der Ansprüche 1 bis 6, **dadurch gekennzeichnet, dass** die Dosierung der Komponenten c1) bis c6) kontinuierlich in gleichbleibenden Mengenströmen erfolgt.

**8.** Verfahren nach einem der Ansprüche 1 bis 7, **dadurch gekennzeichnet, dass** die Monomeren A2 in Form einer wässrigen Monomerenemulsion eingesetzt werden.

**9.** Verfahren nach einem der Ansprüche 1 bis 8, **dadurch gekennzeichnet, dass** die Emulsionspolymerisation in Anwesenheit eines Saatlatex erfolgt.

**10.** Wässrige Copolymerisatdispersion erhältlich nach einem Verfahren gemäß einem der Ansprüche 1 bis 9.

**11.** Verwendung einer wässrigen Copolymerisatdispersion gemäß Anspruch 10 als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen.

**12.** Copolymerisatpulver erhältlich aus einer wässrigen Copolymerisatdispersion gemäß Anspruch 10.

**13.** Verwendung von Copolymerisatpulver gemäß Anspruch 12 als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen.

Europäisches Patentamt

# EUROPÄISCHER RECHERCHENBERICHT

Nummer der Anmeldung
EP 06 10 0834

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | US 3 677 991 A (CARL MOORE) 18. Juli 1972 (1972-07-18) * das ganze Dokument * | 1-13 | INV. C08F2/22 C09J5/00 |
| D,A | US 2 520 959 A (POWERS JOHN R) 5. September 1950 (1950-09-05) * das ganze Dokument * | 1-13 | |
| X | US 3 616 166 A (LOUIS E. KELLEY) 26. Oktober 1971 (1971-10-26) * Spalte 2, Zeile 45 * | 12,13 | |
| X | US 3 704 157 A (JOHN WILLIAM MCDONALD) 28. November 1972 (1972-11-28) * Spalte 3, Zeile 30 - Spalte 3, Zeile 73 * | 12,13 | |
| X | US 3 935 151 A (NICKERSON ET AL) 27. Januar 1976 (1976-01-27) * das ganze Dokument * | 1-13 | |

RECHERCHIERTE SACHGEBIETE (IPC)
C08F
C09J

Der vorliegende Recherchenbericht wurde für alle Patentansprüche erstellt

| Recherchenort | Abschlußdatum der Recherche | Prüfer |
|---|---|---|
| München | 8. Juni 2006 | Van Golde, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

7

**ANHANG ZUM EUROPÄISCHEN RECHERCHENBERICHT ÜBER DIE EUROPÄISCHE PATENTANMELDUNG NR.** EP 06 10 0834

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2006

| Im Recherchenbericht angeführtes Patentdokument | Datum der Veröffentlichung | Mitglied(er) der Patentfamilie | Datum der Veröffentlichung |
|---|---|---|---|
| US 3677991 A | 18-07-1972 | KEINE | |
| US 2520959 A | 05-09-1950 | KEINE | |
| US 3616166 A | 26-10-1971 | KEINE | |
| US 3704157 A | 28-11-1972 | CA 952382 A1 | 06-08-1974 |
| | | DE 2158016 A1 | 25-05-1972 |
| | | FR 2115924 A5 | 07-07-1972 |
| | | GB 1356800 A | 19-06-1974 |
| | | IT 941239 B | 01-03-1973 |
| US 3935151 A | 27-01-1976 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4003422 A
- US 3677991 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** *The Applications of Synthetic Resin Emulsions,* 1972, 246 ff
- **D. DIEDERICH.** *Chemie in unserer Zeit 24,* 1990, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **J. BRANDRUP ; E.H. IMMERGUT.** Polymerhandbook. John Weley & Sons, 1989, 133-141
- **S.E. HARDING et al.** Analytical Ultracentrifugation in Biochemistry and Polymer Science. Royal Society of Chemistry, 1992
- **W. MÄCHTLE.** Analysis of Polymer Dispersions with an Eight-Cell-AUC-Multiplexer: High Resolution Particle Size Distribution and Density Gradient Techniques. 147-175
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989